# EUROPÄISCHE PATENTSCHRIFT

(11) **EP 2 769 236 B1**
(45) Veröffentlichungstag und Bekanntmachung des Hinweises auf die Patenterteilung: **10.10.2018**
(21) Anmeldenummer: 12751333.1
(22) Anmeldetag: 27.08.2012
(51) Int. Cl.: G01S 7/02, G01S 13/02, H01Q 1/32, H01Q 25/00, G01S 3/16, G01S 3/22, G01S 13/34, H01Q 3/24, G01S 13/24

(54) **WINKELAUFLÖSENDER RADARSENSOR**
ANGLE-RESOLVING RADAR SENSOR
CAPTEUR RADAR À RÉSOLUTION ANGULAIRE

(30) Priorität: 17.10.2011 DE 102011084610
(43) Veröffentlichungstag der Anmeldung: 27.08.2014
(73) Patentinhaber: Robert Bosch GmbH, 70442 Stuttgart (DE)
(72) Erfinder: GROSS, Volker, 71254 Ditzingen (DE); SCHOOR, Michael, 70195 Stuttgart (DE)
(86) Internationale Anmeldenummer: PCT/EP2012/066585
(87) Internationale Veröffentlichungsnummer: WO 2013/056880

(56) Entgegenhaltungen:
- EP-A1- 0 371 133
- EP-A1- 1 788 408
- WO-A1-2008/066436
- DE-A1- 10 027 345
- KR-B1- 100 979 284

## Beschreibung

Die Erfindung betrifft einen winkelauflösenden Radarsensor, insbesondere für Kraftfahrzeuge, mit einer Antenne mit mehreren Antennenelementen, die jeweils auf einen von mehreren Auswertungskanälen schaltbar sind, und mit einer Auswerteeinrichtung zur Bestimmung des Einfallswinkels eines von einem Objekt empfangenen Signals anhand der in den Auswertungskanälen gemessenen Amplituden, wobei die Anzahl der Antennenelemente, die ein Signal von demselben Objekt empfangen, größer ist als die Anzahl der Auswertungskanäle und eine Schalteinrichtung dazu vorgesehen ist, die Auswertungskanäle abwechselnd mit unterschiedlichen Auswahlen der Antennenelemente zu verbinden.

Radarsensoren werden in Kraftfahrzeugen beispielsweise zur Messung der Abstände, Relativgeschwindigkeiten und Azimutwinkel von im Vorfeld des eigenen Fahrzeugs georteten Fahrzeugen oder sonstigen Objekten eingesetzt. Radarsensoren mit einer Gruppenantenne in Planarbauweise haben bei diesen Anwendungen den Vorteil, dass sie nur wenig Bauraum beanspruchen. Einzelne Antennenelemente der Gruppenantenne sind dann in Abstand zueinander auf einer Horizontalen angeordnet, so dass unterschiedliche Azimutwinkel der georteten Objekte zu unterschiedlichen Differenzen in den Lauflängen führen, die die Radarsignale vom Objekt bis zum jeweiligen Antennenelement zurückzulegen haben. Diese Lauflängendifferenzen führen zu entsprechenden Unterschieden in der Phase der Signale, die von den Antennenelementen empfangen und in den zugehörigen Auswertungskanälen ausgewertet werden. Durch Abgleich der in den verschiedenen Kanälen empfangenen (komplexen) Amplituden mit entsprechenden Amplituden in einem Antennendiagramm lässt sich dann der Einfallswinkel des Radarsignals und damit der Azimutwinkel des georteten Objekts bestimmen.

Damit eine hohe Winkelauflösung erreicht wird, sollte die Apertur der Antenne möglichst groß sein. (Im Falle einer planaren Gruppenantenne gibt die Apertur die Gesamtausdehnung der Gruppenantenne in der Richtung der Winkelmessung (horizontal) bezogen auf die Wellenlänge λ der Radarstrahlung an). Wenn jedoch die Abstände zwischen den benachbarten Antennenelementen zu groß sind, können Mehrdeutigkeiten in der Winkelmessung auftreten, da man für Lauflängendifferenzen, die sich um ganzzahlige Vielfache der Wellenlänge der λ unterscheiden, dieselben Phasenbeziehungen zwischen den empfangenen Signalen erhält. Eine eindeutige Winkelmessung lässt sich beispielsweise mit einer ULA-Struktur (Uniform Linear Array) erreichen, bei der die Antennenelemente in Abständen von λ/2 angeordnet sind. In diesem Fall nimmt jedoch mit zunehmender Apertur auch die Anzahl der Antennenelemente und damit auch die Anzahl der erforderlichen Auswertungskanäle zu, so dass entsprechend hohe Hardwarekosten entstehen.

Ein Radarsensor der eingangs genannten Art ist aus EP 1 788 408 A1 bekannt.

Diese Druckschrift sowie DE 100 27 345 A1 beschreiben Monopuls-Radarsensoren, bei denen zwischen Gruppen von Empfangsantennen umgeschaltet wird, die voneinander verschiedene Empfindlichkeitsbereiche haben.

Aus EP 0 371 133 A1 ist ein Rundum-Radar bekannt, bei dem zwischen vier Gruppen von Antennenelementen umgeschaltet wird, die für vier zueinander rechtwinklige Empfangsichtungen empfindlich sind.

KR 100 979 284 B1 beschreibt einen Radarsensor, bei dem zwischen Auswertungskanälen umgeschaltet wird, die jeweils Signale von mehreren Antennenelementen erhalten.

Aufgabe der Erfindung ist es, einen Radarsensor zu schaffen, der mit einer gegebenen Anzahl von Auswertungskanälen eine eindeutige Winkelmessung mit höherer Winkelauflösung ermöglicht.

Diese Aufgabe wird dadurch gelöst, dass die Auswerteeinrichtung dazu ausgebildet ist, für jede Auswahl der Antennenelemente eine Funktion des Einfallswinkels zu berechnen, die eine Korrelation zwischen den in den Auswertungskanälen empfangenen Signalen und entsprechenden Werten in einem Antennendiagramm angibt, aus diesen Funktionen eine Summenfunktion zu bilden, und das Maximum dieser Summenfunktion aufzusuchen.

Eine Auswahl von Antennenelementen, in der jedes einzelne Element mit einem der Empfangskanäle verbunden ist, soll im folgenden als "Array" bezeichnet werden. Mit der Schalteinrichtung lässt sich beispielsweise zwischen einem Array mit großer Apertur und einem Array mit kleinerer Apertur umschalten. Das Array mit großer Apertur liefert mehrdeutige Winkelinformationen mit hoher Winkelauflösung. Das Array mit der kleineren Apertur und entsprechend kleineren Abständen zwischen den benachbarten Antennenelementen kann dann dazu benutzt werden, die Mehrdeutigkeiten zu beseitigen. Ebenso ist es auch möglich, in einer regelmäßigen Abfolge zwischen drei oder mehr unterschiedlichen Arrays umzuschalten. Die Arrays müssen dabei nicht notwendigerweise eine unterschiedliche Apertur haben. Beispielsweise ist es auch möglich, unterschiedliche Arrays mit gleicher Apertur zu wählen, bei denen die Abstände zwischen den einzelnen Antennenelementen so gewählt sind, dass die für die verschiedenen Arrays erhaltenen Phasenbeziehungen nur für einen einzigen Einfallswinkel konsistent sind und somit die Mehrdeutigkeit beseitigt wird.

Vorteilhafte Ausgestaltungen der Erfindung sind in den Unteransprüchen angegeben.

Im folgenden wird ein Ausführungsbeispiel anhand der Zeichnung näher erläutert.

Es zeigen:
- Fig. 1: ein Blockdiagramm eines erfindungsgemäßen Radarsensors; und
- Fig. 2: Diagramme zur Erläuterung der Funktionsweise des Radarsensors nach Fig. 1.

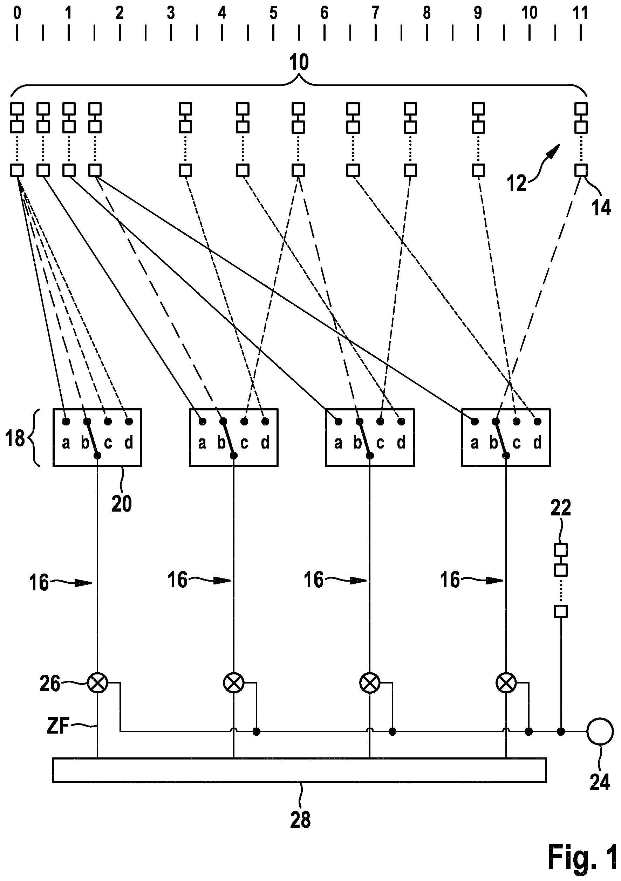

Der in Fig. 1 gezeigte Radarsensor weist eine planare Gruppenantenne 10 auf, die im gezeigten Beispiel durch elf horizontal nebeneinander angeordnete Antennenelemente 12 gebildet wird. Jedes Antennenelement 12 umfasst mehrere in einer vertikalen Spalte angeordnete, seriell gespeiste Patches 14, die zusammen eine Strahlformung in vertikaler Richtung (Elevation) bewirken.

Während bei einem herkömmlichen Radarsensor jedem einzelnen Antennenelement ein gesonderter Auswertungskanal zugeordnet ist, weist der hier beschriebene Radarsensor insgesamt nur vier Auswertungskanäle 16 zur Auswertung der Signale der insgesamt elf Antennenelemente 12 auf. Eine Schalteinrichtung 18 wird durch vier elektronische Schalter 20 gebildet, die jeweils einem der Auswertungskanäle 16 zugeordnet sind und jeweils vier verschiedene Schaltstellungen haben. In jeder Schaltstellung wird der Auswertungskanal 16 mit einem der Antennenelemente 12 verbunden. Für jede Kombination von Schaltstellungen der vier Schalter 20 erhält man so eine andere Auswahl von vier Antennenelementen, deren Signale in den vier Auswertungskanälen 16 ausgewertet werden. Diese unterschiedlichen Auswahlen von Antennenelementen sollen im folgenden als "Arrays" bezeichnet werden.

Der hier als Beispiel beschriebene Radarsensor ist ein FMCW-Radarsensor (Frequency Modulated Continuous Wave) mit einem bistatischen Antennensystem. Dementsprechend ist zusätzlich zu der als Empfangsantenne dienenden Gruppenantenne 10 eine Sendeantenne 22 vorgesehen, die ein von einem lokalen Oszillator 24 erzeugtes Radarsignal sendet. Das von einem Objekt reflektierte Radarecho wird dann von jedem Antennenelement 12 der Gruppenantenne 10 empfangen. Jeder Auswertungskanal 16 enthält einen Mischer 26, der das vom angeschlossenen Antennenelement 12 empfangene Signal mit einem Anteil des vom lokalen Oszillator 24 erzeugten Signals zu einem Zwischenfrequenzsignal ZF heruntermischt, das dann in einer Auswerteeinrichtung 28 weiter ausgewertet wird.

Die Frequenz des vom lokalen Oszillator 24 erzeugten Signals wird rampenförmig moduliert, mit abwechselnd steigenden und fallenden Rampen. Die Frequenz des Zwischenfrequenzsignals ZF entspricht der Differenz zwischen dem von der Sendeantenne 22 gesendeten Signal und dem vom Antennenelement 14 empfangenen Signal und ist damit von der Signallaufzeit von der Sendeantenne 22 zum Objekt und vom Objekt zurück zum Antennenelement 14 abhängig. Diese Laufzeit ist proportional zum Abstand des Objekts. Wenn sich das Objekt relativ zum Radarsensor bewegt, enthält die Frequenz des Zwischensignals ZF zusätzlich noch eine Doppler-Komponente, die von der Relativgeschwindigkeit des Objekts abhängig ist. Durch Auswertung der auf mehreren aufeinanderfolgenden Rampen erhaltenen Signale ist es dann in bekannter Weise möglich, jedem georteten Objekt einen eindeutigen Abstand und eine eindeutige Relativgeschwindigkeit zuzuordnen.

Die Radarsignale, die von demselben Punkt eines Objekts reflektiert werden und dann von den verschiedenen Antennenelementen 12 empfangen werden, legen (zumindest bei einem von 0° verschiedenen Azimutwinkel des Objekts) unterschiedliche Lauflängen zurück und unterscheiden sich daher in der Phase. Die Signalleitungen von den Antennenelementen 12 zu de Mischern 26 sind in der Länge so abgestimmt, dass die Phasendifferenzen der Signale erhalten bleiben. Da alle Signale mit demselben Oszillatorsignal gemischt werden, erhält man entsprechende Phasendifferenzen auch in den Zwischenfrequenzsignalen ZF. Anhand dieser Phasendifferenzen lässt sich in der Auswerteeinrichtung 28 der Einfallswinkel der empfangenen Radarstrahlung und damit der Azimutwinkel des zugehörigen Objekts bestimmen.

In Fig. 1 ist oberhalb der Gruppenantenne 10 eine Längenskala dargestellt, die die Positionen der einzelnen Antennenelemente 14 in Einheiten der Wellenlänge λ der Radarstrahlung angibt. Die Position des am weitesten links gelegenen Antennenelements 12 ist definiert als Position 0. Das am weitesten rechts gelegene Antennenelement 12 befindet sich dann in der Position 11. Die Gesamtausdehnung der Gruppenantenne 10 beträgt somit 11 λ, d.h. ihre maximale Apertur hat den Wert 11.

Die vier am weitesten links gelegenen Antennenelemente 12 befinden sich in den Positionen 0,0, 0,5, 1,0 und 1,5 und bilden somit zusammen eine ULA-Struktur mit vier Elementen. Wenn sich alle Schalter 20 der Schalteinrichtung 18 in der Schaltstellung "a" befinden, sind die vier Elemente dieser ULA-Struktur auf die vier Auswertungskanäle 16 geschaltet. In dieser Schaltstellung ist eine eindeutige Winkelmessung möglich, allerdings, aufgrund der geringen Apertur dieses Arrays, nur mit geringer Winkelauflösung.

Wenn sich die vier Schalter 20 alle in der Schaltstellung "b" befinden, so sind die Antennenelemente 12, die die Positionen 0,0, 1,5, 5,5 und 11,0 haben, die auf die vier Auswertungskanäle 16 geschaltet, wie in Fig. 1 durch gestrichelte Linien mit kurzen Unterbrechungen angedeutet wird. Bei Verwendung dieses Arrays ist eine Messung mit maximaler Winkelauflösung möglich, allerdings unter Verzicht auf Eindeutigkeit.

Wenn sich alle vier Schalter 20 in der Schaltstellung "c" befinden, so haben die Antennenelemente 12 des ausgewählten Arrays die Positionen 0,0, 5,5, 7,7 und 9,0 (gestrichelte Linien mit etwas kürzerer Strichlänge). In der Schaltstellung "d" haben die Antennenelemente 12 des ausgewählten Arrays die Positionen 0,0, 3,3, 4,4 und 6,6 (feingestrichelte Linien).

Für jedes dieser vier wählbaren Arrays lässt sich ein Antennendiagramm erstellen, das die Amplituden- und/oder Phasenbeziehungen der in den vier Auswertungskanälen 16 empfangenen Signale in Abhängigkeit vom angenommenen Einfallswinkel θ des Radarechos angibt. Generell wird der Azimutwinkel des georteten Objekts, als der tatsächliche Einfallswinkel a, dem angenommenen Einfallswinkel θ entsprechen, für den sich die beste Übereinstimmung zwischen dem tatsächlich in den Auswertungskanälen 16 gemessenen Amplituden- und/oder Phasenbeziehungen und den entsprechenden Werten im Antennendiagramm ergibt. Für die Auswertung lässt sich eine DML-Funktion (Deterministic Maximum Likelihood) berechnen, die die Korrelation zwischen den tatsächlich gemessenen Werten und den Werten im Antennendiagramm als Funktion des Einfallswinkels θ angibt. Der Funktionswert der DML-Funktion variiert zwischen 0 (keine Korrelation) und 1 (völlige Übereinstimmung). Die in den vier Auswertungskanälen 16 gemessenen Amplituden und/oder Phasen (komplexe Amplituden) kann man als vierkomponentigen Vektor auffassen. Entsprechend bilden auch die Werte im Antennendiagramm für jeden Einfallswinkel θ einen vierkomponentigen Vektor. Die DML-Funktion lässt sich dann berechnen, indem man diese beiden Vektoren jeweils auf 1 normiert und dann das Skalaprodukt bildet.

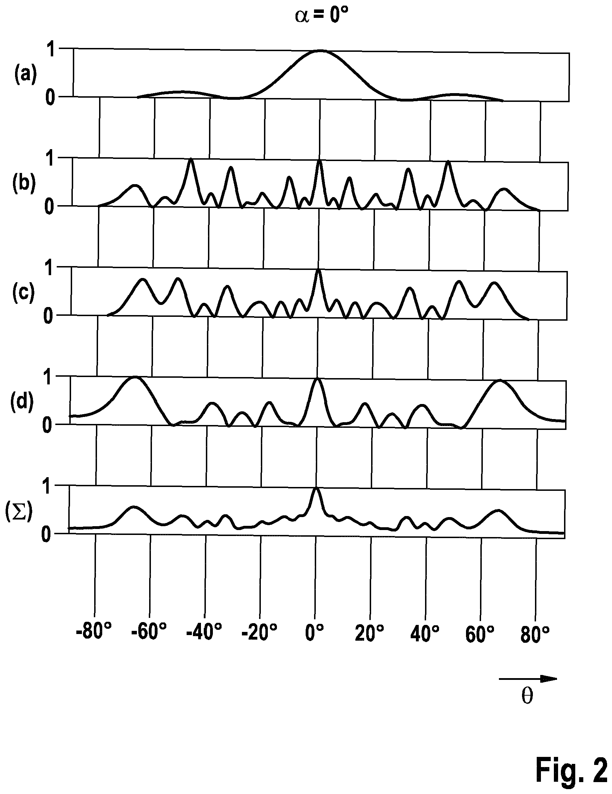

In Fig. 2 sind Beispiele für solche DML-Funktionen für die vier Arrays gezeigt, die den Schaltstellungen "a" - "d" in Fig. 1 entsprechen, jeweils unter der Annahme, dass die Radarstrahlung frontal einfällt (tatsächlicher Einfallswinkel α = 0°) und die empfangenen Signale unverrauscht sind. Bei Eindeutigkeit sollte dann der tatsächliche Azimutwinkel des georteten Objekts bei dem Winkel θ liegen, für den die DML-Funktion den Wert 1 erreicht (in diesem Beispiel also bei 0°). Für andere Werte des tatsächlichen Einfallswinkel α würde man andere (asymmetrische) DML-Funktionen erhalten, bei denen die Maxima an anderen Stellen liegen. Jede Funktion hätte dann zumindest ein Maximum an der Stelle θ = α.

Das obere Diagramm (a) in Fig. 2 zeigt die DML-Funktion für das Array (ULA), das der Schaltstellung "a" in Fig. 1 entspricht. Wie zu erwarten hat diese Funktion ein eindeutiges Maximum bei θ = 0. Die Diagramme (b) - (d) in Fig. 2 zeigen die entsprechenden DML-Funktionen für die Schaltstellungen "b" - "d" in Fig. 1. Man erkennt, dass hier wesentlich schärfere Maxima auftreten, was einer größeren Winkelauflösung entspricht, dafür jedoch jeweils mehrere Maxima vorhanden sind, die zumindest annähernd den Wert 1 erreichen. Da die Signale in der Praxis mehr oder minder verrauscht sein werden, ist mit diesen Arrays keine eindeutige Bestimmung des Einfallswinkels möglich.

Eine eindeutige Winkelbestimmung mit hoher Auflösung wird jedoch möglich, wenn man die mit allen vier Arrays erhaltenen Signale miteinander kombiniert, beispielsweise indem man die Summe der vier DML-Funktionen bildet. Diese Summe ist in Fig. 2 in dem Diagramm (∑) dargestellt. Man erkennt, dass in dieser Summe nur noch ein scharf ausgeprägtes Maximum bei θ = 0 vorhanden ist, während die übrigen Maxima so weit unterdrückt sind, dass sie auch unter Berücksichtigung des Rauschens nicht den Wert 1 erreichen.

Die Schalteinrichtung 18 (Fig. 1) kann nun beispielsweise so angesteuert werden, dass nach jeder Frequenzrampe des lokalen Oszillators 24 auf eine andere Schaltstellung umgeschaltet wird, so dass nach vier Rampen eine Messung mit jedem der vier möglichen Arrays durchgeführt wurde. Die in den Auswertungskanälen 16 erhaltenen Ergebnisse werden dann (für jedes einzelne Objekt) gespeichert, so dass nach vier Rampen anhand der Summe der DML-Funktionen der Azimutwinkel jedes Objekts mit hoher Auflösung und ohne Mehrdeutigkeiten bestimmt werden kann.

Anstelle der Summe der DML-Funktionen kann wahlweise auch eine gewichtete Summe verwendet werden, wobei die Gewichtung für jedes Array beispielsweise von der Apertur des Arrays und/oder von der jeweiligen Steigung der Frequenzrampe abhängen kann, auf der mit diesem Arrays gemessen wird.

In Fig. 1 wurde der am weitesten links liegende Schalter 20 nur aus gründen der Systematik eingezeichnet. In der Praxis ist dieser Schalter funktionslos, da in diesem Kanal stets das Signal des am weitesten links gelegenen Antennenelements 14 ausgewertet wird. Dieser Schalter kann deshalb in der Praxis durch eine feste Verbindung ersetzt werden.

Die hier gezeigte Anordnung der Antennenelemente 14 ist nur als Beispiel zu verstehen. Es könnten auch andere Positionen für die Antennenelemente gewählt werden. Ebenso könnte auch die Anzahl der Antennenarrays und/oder die Anzahl der Auswertungskanäle variiert werden. Die Positionen der Antennenelemente 14 in den verschiedenen Arrays können beispielsweise mit Hilfe einer Computersimulation optimiert werden. Besonders zweckmäßig ist eine Anordnung der Antennenelemente und eine Auswahl der Arrays, bei der alle Arrays eine verhältnismäßig große Apertur haben und die DML-Funktionen die Bedingung erfüllen, dass es für jeden tatsächlichen Einfallswinkel α nur einen einzigen Wert θ gibt, für den alle DML-Funktionen ein Maximum haben, das nahe an den Wert 1 heranreicht. Bei diesem Wert θ hat dann die Summenfunktion ein absolutes Maximum.

## Patentansprüche

1. Winkelauflösender Radarsensor, insbesondere für Kraftfahrzeuge, mit einer Antenne (10) mit mehreren Antennenelementen (12), die jeweils auf einen von mehreren Auswertungskanälen (16) schaltbar sind, und mit einer Auswerteeinrichtung (28) zur Bestimmung des Einfallswinkels (a) eines von einem Objekt empfangenen Signals anhand der in den Auswertungskanälen (16) gemessenen Amplituden, wobei die Anzahl der Antennenelemente (12), die ein Signal von demselben Objekt empfangen, größer ist als die Anzahl der Auswertungskanäle (16) und eine Schalteinrichtung (18) dazu vorgesehen ist, die Auswertungskanäle (16) abwechselnd mit unterschiedlichen Auswahlen der Antennenelemente (12) zu verbinden, **dadurch gekennzeichnet, dass** die Auswerteeinrichtung (28) dazu ausgebildet ist, für jede Auswahl der Antennenelemente (12) eine Funktion des Einfallswinkels (θ) zu berechnen, die eine Korrelation zwischen den in den Auswertungskanälen (16) empfangenen Signalen und entsprechenden Werten in einem Antennendiagramm angibt, aus diesen Funktionen eine Summenfunktion zu bilden, und das Maximum dieser Summenfunktion aufzusuchen.

2. Radarsensor nach Anspruch 1, der als FMCW-Radar konfiguriert ist, bei dem die Frequenz des gesendeten Radarsignals rampenförmig moduliert wird, und bei dem die Schalteinrichtung (18) dazu ausgebildet ist, periodisch, jeweils für eine Frequenzmodulationsrampe, auf eine andere Auswahl von Antennenelementen (12) umzuschalten.

3. Radarsensor nach Anspruch 1 oder 2, bei dem die Anordnung der Antennenelemente (12) und die von der Schalteinrichtung (18) vorgenommenen Auswahlen so konfiguriert sind, dass die Summenfunktion für jede Kombination von empfangenen Signalen, die einem realen Einfallswinkel (a) der Radarstrahlung entspricht, ein eindeutiges Maximum aufweist.

## Claims

1. Angle-resolving radar sensor, in particular for motor vehicles, having an antenna (10) with a plurality of antenna elements (12) which can each be switched to one of a plurality of evaluation channels (16), and having an evaluation device (28) for determining the angle of incidence (a) of a signal received from an object on the basis of the amplitudes measured in the evaluation channels (16), wherein the number of antenna elements (12) receiving a signal from the same object is greater than the number of evaluation channels (16), and a switching device (18) is provided for the purpose of alternately connecting the evaluation channels (16) to different selections of the antenna elements (12), **characterized in that** the evaluation device (28) is designed to calculate a function of the angle of incidence (θ) for each selection of the antenna elements (12), which function indicates a correlation between the signals received in the evaluation channels (16) and corresponding values in an antenna polar diagram, to form a sum function from these functions, and to find the maximum of this sum function.

2. Radar sensor according to Claim 1, which is configured as an FMCW radar, in which the frequency of the transmitted radar signal is modulated in a ramp-shaped manner, and in which the switching device (18) is designed to periodically change over to another selection of antenna elements (12) for a frequency modulation ramp in each case.

3. Radar sensor according to Claim 1 or 2, in which the arrangement of the antenna elements (12) and the selections made by the switching device (18) are configured in such a manner that the sum function for each combination of received signals corresponding to a real angle of incidence (a) of the radar radiation has a unique maximum.

## Revendications

1. Capteur radar à résolution angulaire, en particulier pour véhicules automobiles, muni d'une antenne (10) comportant plusieurs éléments d'antenne (12), dont chacun peut être commuté sur l'un de plusieurs canaux d'évaluation (16), et d'un dispositif d'évaluation (28) destiné à déterminer l'angle d'incidence (α) d'un signal reçu en provenance d'un objet sur la base des amplitudes mesurées dans les canaux d'évaluation (16), dans lequel le nombre d'éléments d'antenne (12) recevant un signal en provenance du même objet est supérieur au nombre des canaux d'évaluation (16) et dans lequel il est prévu un dispositif de commutation (18) pour connecter alternativement les canaux d'évaluation (16) à différentes sélections des éléments d'antenne (12), **caractérisé en ce que** le dispositif d'évaluation (28) est conçu pour calculer, pour chaque sélection des éléments d'antenne (12), une fonction de l'angle d'incidence (θ) qui indique une corrélation entre les signaux reçus dans les canaux d'évaluation (16) et des valeurs correspondantes dans un diagramme d'antenne, afin de déterminer une fonction somme à partir desdites fonctions, et de rechercher le maximum de ladite fonction somme.

2. Capteur radar selon la revendication 1, configuré sous la forme d'un radar FMCW, dans lequel la fréquence du signal radar émis est modulée en forme de rampe et dans lequel le dispositif de commutation (18) est conçu pour commuter périodiquement, pour une rampe de modulation de fréquence respective, sur une autre sélection d'éléments d'antenne (12).

3. Capteur radar selon la revendication 1 ou 2, dans lequel la disposition des éléments d'antenne (12) et les sélections effectuées par le dispositif de commutation (18) sont configurées de manière à ce que la fonction somme présente un maximum unique pour chaque combinaison de signaux reçus correspondant à un angle d'incidence réel (αa) du rayonnement radar.
